(19) Europäisches Patentamt
European Patent Office
Office européen des brevets

(11) **EP 2 608 615 A1**

(12) **EUROPEAN PATENT APPLICATION**
published in accordance with Art. 153(4) EPC

(43) Date of publication:
26.06.2013 Bulletin 2013/26

(51) Int Cl.:
*H04W 72/04* (2009.01)    *H04W 28/06* (2009.01)

(21) Application number: 11818192.4

(22) Date of filing: 16.08.2011

(86) International application number:
PCT/JP2011/068547

(87) International publication number:
WO 2012/023551 (23.02.2012 Gazette 2012/08)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 16.08.2010 JP 2010181868

(71) Applicant: NTT DOCOMO, INC.
Chiyoda-ku
Tokyo 100-6150 (JP)

(72) Inventors:
• ABE, Tetsushi
  Tokyo 100-6150 (JP)
• MIKI, Nobuhiko
  Tokyo 100-6150 (JP)
• OHWATARI, Yusuke
  Tokyo 100-6150 (JP)

(74) Representative: HOFFMANN EITLE
Patent- und Rechtsanwälte
Arabellastrasse 4
81925 München (DE)

(54) **SIGNALING METHOD, BASE STATION, MOBILE TERMINAL, AND WIRELESS COMMUNICATION SYSTEM**

(57)    To provide a signaling method for enabling position information of muting resources to be signaled with a simplified configuration, base station apparatus and mobile terminal apparatus, the signaling method is characterized by having the steps of setting blank resources for a CSI-RS (Channel State Information-Reference Signal) that is a reference signal for downlink channel estimation, and transmitting a bitmap indicative of a position of the blank resources to a mobile terminal apparatus.

FIG.5A BITMAP-BASED METHOD

STARTING CSI-RS INDEX 1
ENDING CSI-RS INDEX 2

FIG.5B TREE-BASED METHOD

NUMBER OF MUTED CSI-RS : 2

FIG.5C NUMBER-BASED METHOD

**Description**

Technical Field

The present invention relates to a signaling method of blank resources, base station apparatus and mobile terminal apparatus.

Background Art

In UMTS (Universal Mobile Telecommunications System) networks, for the purpose of improving spectral efficiency and further improving data rates, by adopting HSDPA (High Speed Downlink Packet Access) and HSUPA (High Speed Uplink Packet Access), it is performed exploiting maximum features of the system based on W-CDMA (Wideband Code Division Multiple Access). For the UMTS network, for the purpose of further increasing high-speed data rates, providing low delay and the like, Long Term Evolution (LTE) has been studied (Non-patent Document 1) .

In the 3G system, a fixed band of 5 MHz is substantially used, and it is possible to achieve transmission rates of approximately maximum 2 Mbps in downlink. Meanwhile, in the LTE system, using variable bands ranging from 1.4 MHz to 20 MHz, it is possible to achieve transmission rates of maximum 300 Mbps in downlink and about 75 Mbps in uplink. Further, in the UMTS network, for the purpose of further increasing the wide-band and high speed, successor systems to LTE have been studied (for example, LTE Advanced (LTE-A)). Accordingly, it is expected that such a plurality of mobile communication systems coexists in the future, and it is conceivable that configurations (base station apparatus, mobile terminal apparatus and the like) capable of supporting the plurality of systems are needed.

In downlink of systems (LTE systems) of LTE, CRS (Common Reference Signal) that is a reference signal common to the cell is defined. The CRS is used in demodulation of transmission data, and is also used in measurement of channel quality (CQI: Channel Quality Indicator) of downlink for scheduling and adaptive control, and measurement (mobility measurement) of downlink propagation path states in an average manner for cell search and handover.

Meanwhile, in downlink of systems (LTE-A systems) of LTE Advanced is defined CSI-RS (Channel State Information-Reference Signal) dedicated to CQI measurement, in addition to the CRS. The CSI-RS supports CQI measurement of a plurality of cells in consideration of transmission and reception of data channel signals by Coordinated Multiple Point (CoMP). The CSI-RS is used in CQI measurement in adjacent cells, and in this respect, differs from the CRS that is used in CQI measurement only in a serving cell.

Prior Art Document

Non-patent Document

[Non-patent Document 1] 3GPP, TR25.912 (V7.1.0), "Feasibility study for Evolved UTRA and UTRAN", Sept. 2006

Disclosure of Invention

Problems to be Solved by the Invention

In addition, in CQI measurement using the CSI-RS, for the purpose of improving accuracy of CQI measurement due to interference from adjacent cells, muting is studied, but there arises the issue of how to notifyposition information of muting resources.

The present invention was made in view of such a respect, and it is an object of the invention to provide a signaling method for enabling position information of muting resources to be signaled with a simplified configuration, base station apparatus and mobile terminal apparatus.

Means for Solving the Problem

A base station apparatus of the invention is characterized by having a setting section that sets blank resources for a CSI-RS (Channel State Information-Reference Signal) that is a reference signal for downlink channel estimation, and a transmission section that transmits a bitmap indicative of a position of the blank resources to a mobile terminal apparatus.

Advantageous Effect of the Invention

According to the invention, it is possible to provide a signaling method for enabling position information of blank resources set by muting to be signaled with a simplified configuration, base station apparatus and mobile terminal apparatus.

Brief Description of Drawings

FIG. 1 contains explanatory views of a location configuration of CRS;
FIG. 2 is an explanatory view of a location configuration of CSI-RS;
FIG. 3 contains explanatory views of muting in CQI measurement using CSI-RS;
FIG. 4 is an explanatory view of a method of measuring CQIs of adjacent cells;
FIG. 5 contains explanatory views of a signaling method of muting resources;
FIG. 6 is a table illustrating the relationship between the signaling method of muting resources and the number of signaling bits;

FIG. 7 contains views showing an example of location indexes numbered for CSI-RS;

FIG. 8 is an explanatory view of a configuration of a mobile communication system;

FIG. 9 is an explanatory view of an entire configuration of a base station apparatus;

FIG. 10 is an explanatory view of an entire configuration of a mobile terminal apparatus;

FIG. 11 is an explanatory view of functional blocks for the base station apparatus to cause the mobile terminal apparatus to measure CQI; and

FIG. 12 is an explanatory view of functional blocks for the mobile terminal apparatus to measure CQI.

Best Mode for Carrying Out the Invention

Before describing a signaling method of muting resources according to invention, described first are CRS (Common Reference Signal) defined in downlink of LTE systems, and CSI-RS (Channel State Information-Reference Signal) of which application to downlink in LTE-A systems was agreed.

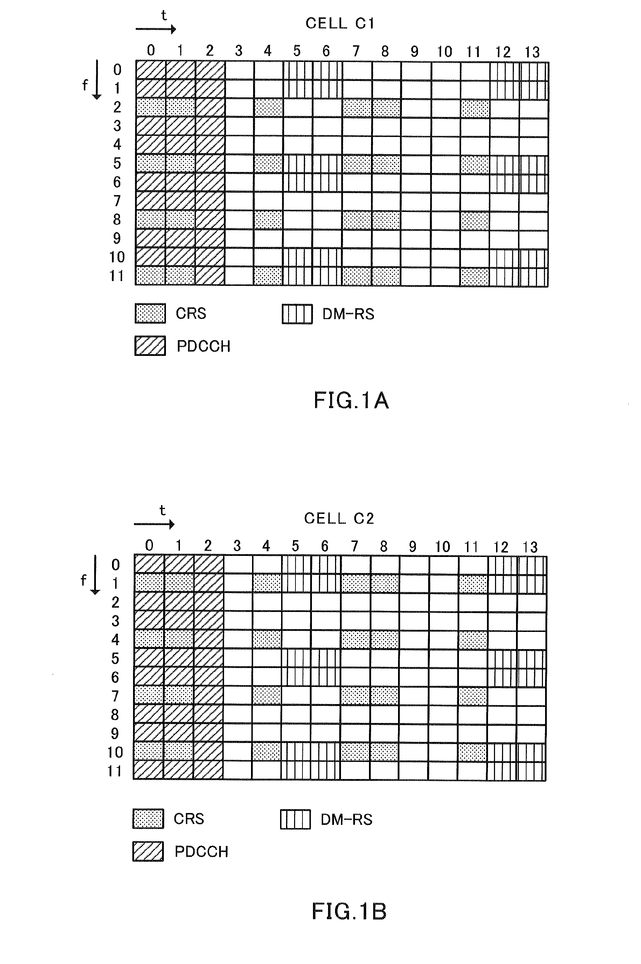

FIG. 1 contains explanatory views of a location configuration of CRS. The CRS is assigned to all resource blocks and all subframes.

The CRS is transmitted to a mobile terminal apparatus with a predetermined frequency, time, transmission power and phase as a cell common reference signal. The frequency and transmission power of the CRS is recognized on the mobile terminal apparatus side by a cell ID (area identifier) and broadcast signal, described later. The CRS is substantially used in demodulation of user data and downlink channel measurement in the mobile terminal apparatus. Channel measurement using the CRS includes measurement of channel quality (CQI: Channel Quality Indicator) of downlink for scheduling and adaptive control, and measurement (mobility measurement) of downlink propagation path states in an average manner for cell search and handover.

As shown in FIG. 1A, the CRS is located not to overlap user data and DM-RS (Demodulation-Reference Signal) in one resource block specified in LTE. One resource block is comprised of 12 subcarriers contiguous in the frequency domain, and 14 symbols contiguous in the time-axis direction. Further, as shown in FIG. 1B, the CRS is shifted in the frequency domain for each cell to suppress interference between adj acent cells. In an example as shown in FIG. 1, the CRS in a cell C2 is shifted by one subcarrier in the frequency domain with reference to the CRS in a cell 1 and mapped.

The CRS is identified by parameters of the position, sequence and transmission power. Among the parameters, the position of the CRS is associated with a cell ID. In other words, the position of the CRS shifted in the frequency domain is determined by the cell ID, and therefore, the mobile terminal apparatus recognizes the cell ID of the existing cell and thereby identifies the location

tion configuration of CRS. Further, the sequence of the CRS is associated with the cell ID, and transmission power is notified by a broadcast signal. In addition, the cell ID to identify the position and sequence of the CRS is recognized by the mobile terminal apparatus by a cell search.

Described next is the CSI-RS configuration considered in downlink of LTE-A systems. The CRS is assigned to all resource blocks and all subframes, and the CSI-RS is assigned at predetermined intervals. Further, in consideration of transmission and reception of data channel signals by CoMP, the CSI-RS is designed with consideration given to performing CQI measurement of not only a serving cell but also adjacent cells. Meanwhile, as in the CRS, the CSI-RS is identified by parameters of the position, sequence and transmission power. Among the parameters, the position of the CSI-RS is capable of being signaled using a broadcast signal of each cell. The mobile terminal apparatus receives the broadcast signal from the base station apparatus, and is thereby capable of identifying the position of the CSI-RS. However, the method of uniquely identifying from the cell ID as in the CRS is not excluded.

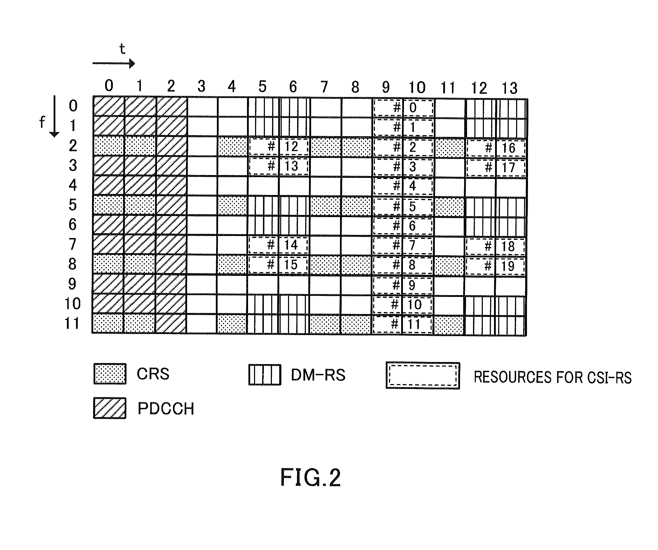

FIG. 2 is a view to explain a location configuration of CRI-RS. The CSI-RS is located not to overlap user data and DM-RS in one resource block specified in LTE. For 8 CSI-RSs (the number of CSI-RS ports is "8"), the CSI-RS configuration as shown in FIG. 2 is agreed. From the viewpoint of suppressing the PAPR, as resources allowed to transmit the CSI-RS, two resource elements adjacent in the time-axis direction are assigned as a set. Two resource elements adjacent in the time-axis direction are always used as a set, and therefore, it is desired that one index is assigned to a set of two resource elements.

In the CSI-RS configuration as shown in FIG. 2, 40 resource elements are reserved for the CSI-RSs. Since one index is assigned to a set of two resource elements as described above, the CSI-RS location positions are indicated by 20 indexes of numbers 0 to 19 in entire one resource block. In this case, the CSI-RSs are assigned to resource elements corresponding to the number of CSI-RS ports (the number of antennas) among 40 resource elements (#0 to #19). Accordingly, the location pattern of CSI-RSs is set in one resource block corresponding to the number of CSI-RS ports.

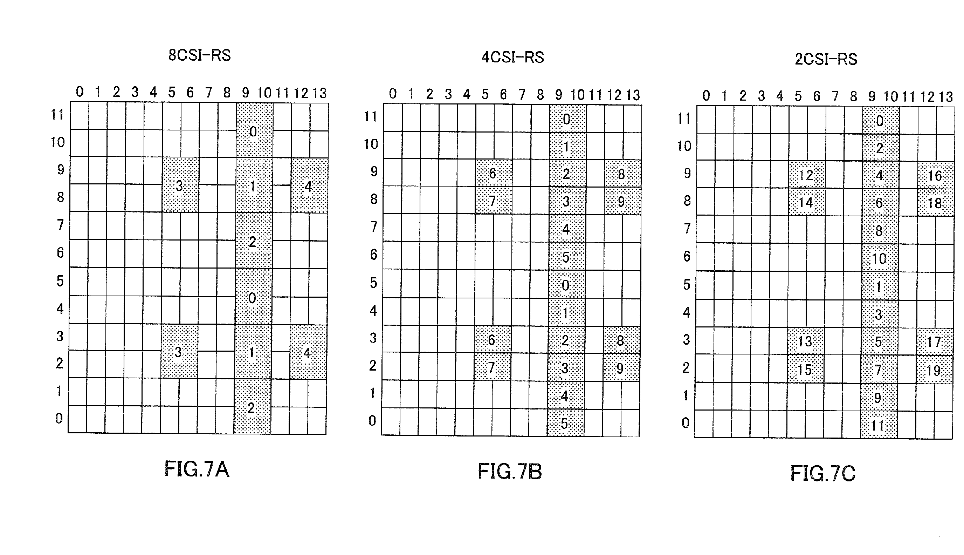

When the number of CSI-RS ports is "8", 8 resource elements are assigned to CSI-RSs among 40 resource elements (#0 to #19). For example, as shown in FIG. 7A, it is possible to select any one of 5 patterns (indexes 0 to 4). The resource elements forming one pattern are provided with the same index. The index thus given to resources to transmit the CSI-RS is called the CSI-RS location index.

When the number of CSI-RS ports is "4", 4 resource elements are assigned to CSI-RSs among 40 resource elements. For example, as shown in FIG. 7B, it is possible to select any one of 10 patterns (indexes 0 to 9). When the number of CSI-RS ports is "2", 2 resource elements are assigned to CSI-RSs among 40 resource elements (#0 to #19). For example, as shown in FIG. 7C, it is possible to select any one of 20 patterns (indexes 0 to 19).

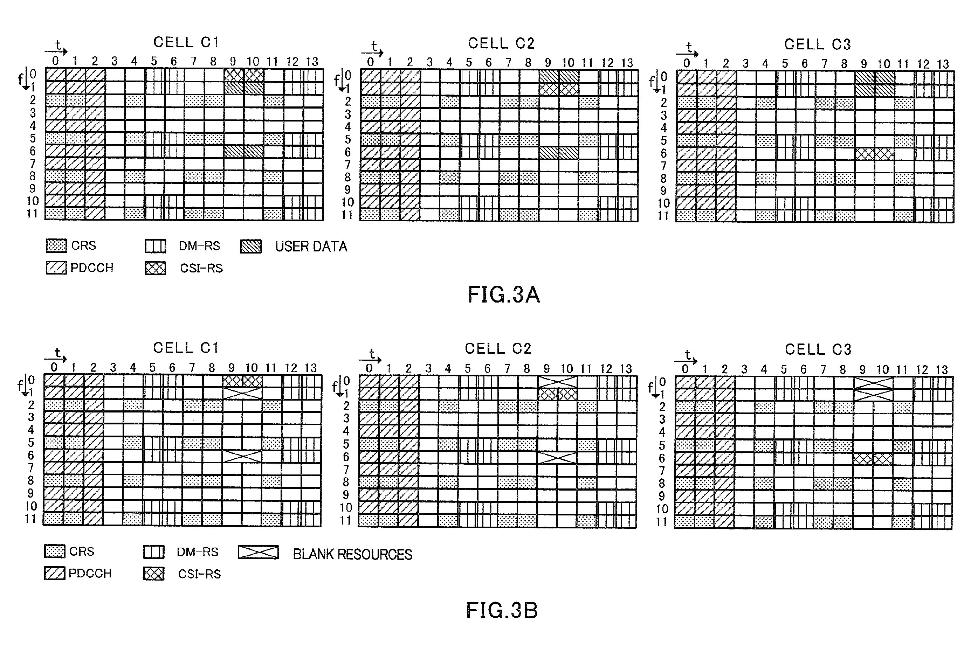

In addition, as described above, in consideration of transmission and reception of data channel signals by CoMP, the CSI-RS is designed with consideration given to performing CQI measurement of not only a serving cell but also adjacent cells. In CQI measurement using the CSI-RS, there is a case that measurement accuracy deteriorates due to interference from adjacent cells. For example, as shown in FIG. 3A, in downlink resources of the cell C1, user data is located in resources corresponding to CSI-RS resources of adjacent cells C2 and C3. Further, in downlink resources of the cell C2, user data is located in resources corresponding to CSI-RS resources of adjacent cells C1 and C3. Still furthermore, in downlink resources of the cell C3, user data is located in resources corresponding to CSI-RS resources of adjacent cells C2 and C3. These items of user data constitute interference components of the CSI-RS in each cell, and become a factor for degrading estimation accuracy of channel quality in the mobile terminal apparatus.

To suppress deterioration of estimation accuracy of channel quality caused by the location of user data, muting is studied. In muting, as shown in FIG. 3B, in resources corresponding to CSI-RS resources of adjacent cells, blank resources are set without user data being located. In a resource block of downlink in the cell C1, resources corresponding to CSI-RS resources of the cells C2 and C3 are set at blank resources. Further, in a resource block of downlink in the cell C2, resources corresponding to CSI-RS resources of the cells C1 and C3 are set at blank resources. Still furthermore, in a resource block of downlink in the cell C3, resources corresponding to CSI-RS resources of the cells C1 and C2 are set at blank resources.

By such a configuration, interference components of CSI-RS caused by user data of adjacent cells are canceled to improve estimation accuracy of channel quality in the mobile terminal apparatus. However, in the case of performing muting, since a data channel of the cell is made non-transmission for adjacent cells, it is necessary to notify the mobile terminal apparatus which resources are made non-transmission.

Then, as a result of studying methods for signaling the position information of blank resources with efficiency, the inventors of the present invention found out that it is possible to signal the position information of blank resources with ease by using a numbering scheme of the CSI location index, and arrived at the invention.

CQI measurement using the CSI-RS will first be described, before describing the signaling method of position information of blank resources according to the invention. CQI measurement using the CSI-RS differs from CQI measurement using the CRS, and is performed not only for the serving cell but also for adjacent cells. The reason why channel quality of a plurality of cells is thus measured is to consider transmission and reaction of user data by CoMP.

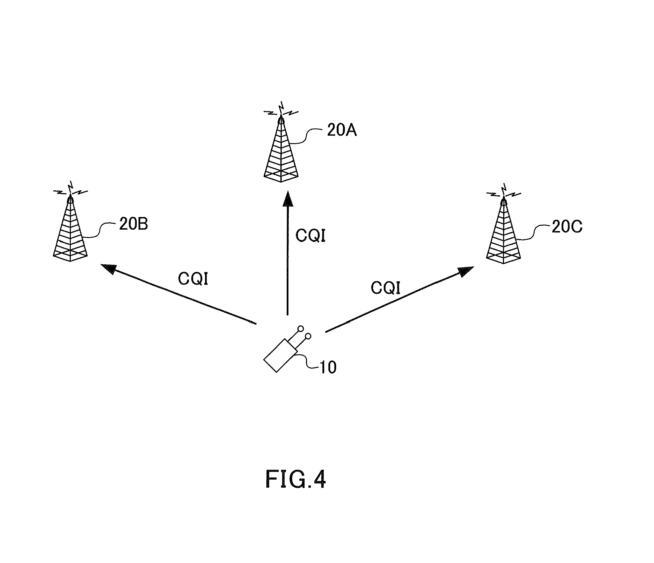

A mobile terminal apparatus transmits the measured CQIs to the base station apparatus of the serving cell and base station apparatuses of the adjacent cells as feedback. The CQI transmitted to the base station apparatus as feedback is used in determining parameters (for example, MCS: Modulation and Coding Scheme) in transmitting user data to the mobile terminal apparatus. In this case, parameters of the CSI-RS are communicated between cells, and parameters of positions, transmission power and the like of CSI-RSs of adjacent cells are transmitted from the serving cell to the mobile terminal apparatus. Herein, CQI measurement of adjacent cells will be described with reference to FIG. 4. FIG. 4 is an explanatory view of a method of measuring CQIs of adjacent cells according to this Embodiment of the invention.

As shown in FIG. 4, a base station apparatus 20A installed in the serving cell is connected to base station apparatuses 20B and 20C installed in adjacent cells to be able to transmit and receive CSI-RS parameters. The form of connection among the base station apparatuses 20A, 20B and 20C is not limited particularly, and may be either wired connection or wireless connection. In this system, each of the base station apparatuses 20B and 20C in the adjacent cells transmits parameters of the position (location index), sequence, transmission power and the like of the CSI-RS to the base station apparatus 20A of the serving cell. The base station apparatus 20A generates a broadcast signal including parameters of the CSI-RSs received from the base station apparatuses 20B and 20C and parameters of the CSI-RS of the cell of the apparatus 20A to transmit to the mobile terminal apparatus 10.

The parameters of the CSI-RS in the serving cell include the position, sequence and transmission power of the CSI-RS. The parameters of the CSI-RS in the adjacent cell include the adjacent cell ID and the position, sequence and transmission power of the CSI-RS. Using the broadcast signal from the serving cell, the mobile terminal apparatus 10 is capable of identifying the position, sequence and transmission power of the CSI-RS of the adjacent cell, and is thereby capable of measuring the CQI of the adjacent cell.

Further, in CQI measurement using the CSI-RS, as described above, for the purpose of improving accuracy of CQI measurement due to interference from adjacent cells, muting is effective. Muting is performed by setting resources in which the CSI-RS is located in an adjacent cell at blank resources (null).

The mobile terminal apparatus recognizes the presence or absence of muting based on the position information of blank resources notified from the base station apparatus, recognizes that data in the position is non-transmission and thereby recognizes the number of resource elements assigned data.

The position information of blank resources is notified from the base station apparatus to the mobile terminal apparatus on the broadcast channel. The base station apparatus notifies the mobile terminal apparatus of the position information of blank resources using the numbering scheme of the CSI-RS location index numbered for resources for the CSI-RS.

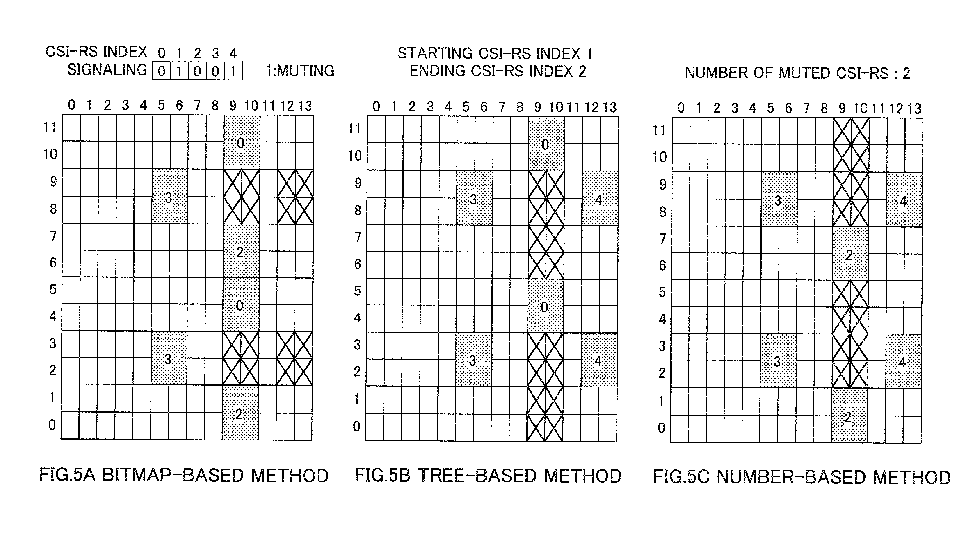

Referring to FIGs. 5A, 5B and 5C, described next are three kinds of muting notification methods. In addition, herein, the case that the number of CSI-RS ports (the number of antennas) is "8" will be exemplified, but the invention is not limited to this configuration. For example, the invention is applicable to the case that the number of CSI-RS ports (the number of antennas) is "4" or "2". Further, in FIG. 5, blank resources are set using 2x2 resource elements (hereinafter, referred to as an REB: Resource Element Block) as one unit.

FIG. 5A is an explanatory view of a bitmap-based muting resource notification method. The bitmap-based muting resource notification method as shown in the figure is to signal a muting position of a bitmap form that associates the CSI-RS location index (see FIG. 2) numbered for resources for CSI-RS with the presence or absence of muting in a one-to-one correspondence.

In the specific example as shown in FIG. 5A, in the case of 8 CSI-RSs, the case is shown that the CSI-RS is transmitted in resources of the CSI-RS location indexes of "0", "2" and "3", and that resources of the CSI-RS location indexes of "1" and "4" are muted. In this case, in association with CSI-RS location indexes [0, 1, 2, 3, 4], [0, 1, 0, 0, 1] is signaled as the bitmap information. In the bitmap information, the muting position is set for "1", and the position that is not muted is set for "0".

Further, in this method, to signal the mutingposition, n bits are required in associated with the total number n of CSI-RS locationindexes. For example, in the case of 8 CSI-RSs, since the number of CSI-RS location indexes is "5", 5 bits are required as signaling bits. Such a bitmap-based muting resource notification method is capable of supporting various patterns of muting and actualizing high flexibility. In addition, in the bitmap information, the muting position may be set for "0", and the position that is not muted may be set for "1".

FIG. 5B is an explanatory view of a tree-based muting resource notificationmethod. The tree-based muting resource notification method as shown in the figure is to signal a muting start resource and a muting end resource using CSI-RS location indexes numbered for resources for CSI-RS.

In the specific example as shown in FIG. 5B, in the case of 8 CSI-RSs, the case is shown that the CSI-RS is transmitted in resources of the CSI-RS location indexes of "0", "3" and "4", and that resources of the CSI-RS location indexes of "1" and "2" are muted. In this case, the muting start resource is indicated by CSI-RS location index "1", and the muting end resource is indicated by CSI-RS location index "2".

Further, in this method, the number X of bits required to signal the muting position is obtained by the following equation.

[Eq.1]

$$X = \lceil \log_2(n(n+1))/2 \rceil$$

For example, in the case of 8 CSI-RSs, since the total number n of CSI-RS location indexes is "5", 4 bits are required as signaling bits. In such a tree-based muting resource notification method, since it is only required to notify the muting start resource and the muting end resource, the effect of reducing the number of signaling bits is larger, as the number of contiguous resources for consecutive muting is higher.

FIG. 5C is an explanatory view of a number-based muting resource notification method. The number-based muting resource notification method as shown in the figure is to signal the number of contiguous muting REBs (muting end resource). The muting start position is fixed to CSI-RS location index "0". In addition, as long as the muting start position is fixed or semi-fixed, the position is not limited to the lowest number of "0", and may be started from "1".

In the specific example as shown in FIG. 5C, in the case of 8 CSI-RSs, the case is shown that the CSI-RS is transmitted in resources of the CSI-RS location indexes of "2", "3" and "4", and that resources of the CSI-RS location indexes of "0" and "1" are muted. In this case, since two contiguous REBs of the indexes of "1" to "2" are targeted for muting, the number of muting REBs (muting end resource) is two (=2).

Further, in this method, the number X of bits required to signal the muting position is obtained by the following equation.

[Eq.2]

$$X = \lceil \log_2(n) \rceil$$

For example, in the case of 8 CSI-RSs, since the total number n of CSI-RS location indexes is "5", 3 bits are required as signaling bits. In such a number-based muting resource notification method, since it is only required to notify the number of contiguous muting REBs, it is possible to further reduce the number of signaling bits.

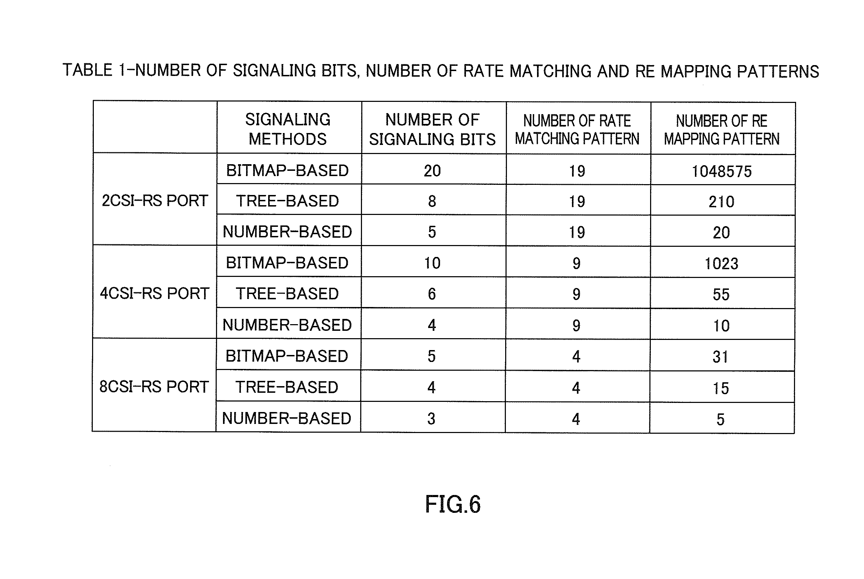

FIG. 6 is a table showing the numbers of signaling bits, the numbers of rate matching patterns and the numbers of RE mapping patterns associated with the above-mentioned three muting resource notification methods. Trial calculation is made on each of items such as the number of signaling bits and the number of patterns for each of 2 CSI-RSs, 4 CSI-RSs and 8 CSI-RSs.

In the bitmap-based muting resource notification method, the number of signaling bits is the highest, but the number of RE mapping patterns is also the highest, and it is thus understood that the method is excellent in flexibility. Meanwhile, in the number-based muting resource notification method, the number of RE mapping patterns is the lowest, but the number of signaling bits is also the lowest, and therefore, it is possible to reduce overhead.

Further, the tree-based muting resource notification method (FIG. 5B) and the number-based muting resource notification method (FIG. 5C) have high compatibility with CSI-RS location indexes numbered as shown in FIG. 7. For example, in the case of 4 CSI-RSs as shown in FIG. 7, the CSI-RS location indexes are aligned in ascending numeric order. Further, in the case of 2 CSI-RSs as shown in FIG. 7, even numbers and odd numbers are separate, but the CSI-RS location indexes are aligned in ascending numeric order. As in the tree-based (including number-based) muting resource notification method, by combining with the method of designating the CSI-RS location indexes by continuous numbers, it is possible to designate muting resources sequentially from the low number.

Thus, using the numbering scheme of the CSI-RS allocation index, the position information of blank resources is notified to the mobile terminal apparatus by any one of the signaling methods as shown in FIGs. 5A to 5C. The mobile terminal apparatus is notified of the position information of blank resources, and is thereby capable of demodulating user data while ignoring blank resources.

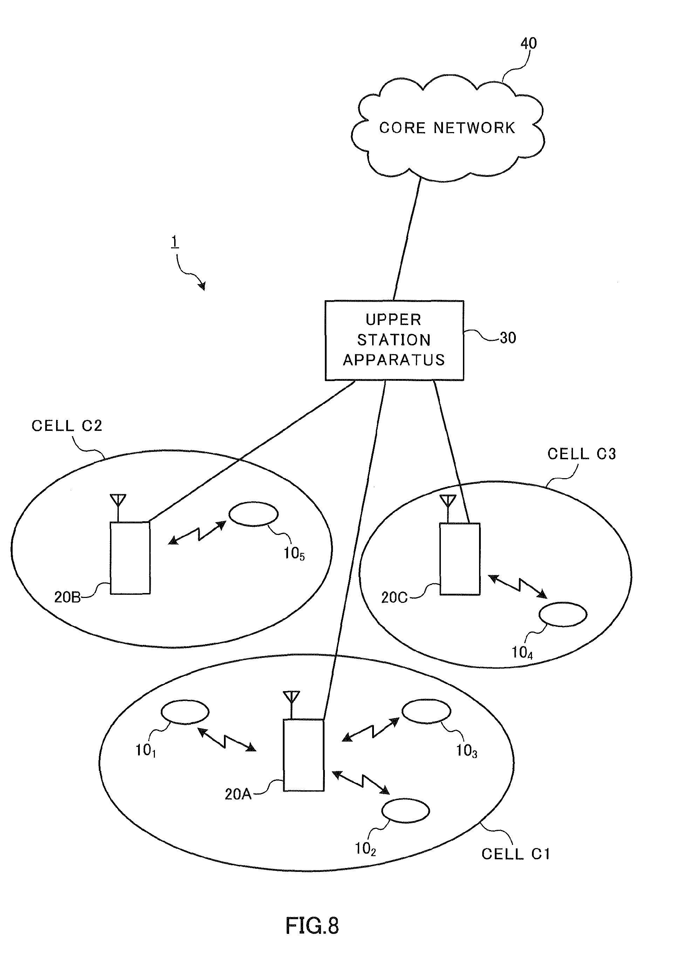

A radio communication system according to the Embodiment of the invention will specifically be described herein. FIG. 8 is an explanatory view of a system configuration of the radio communication system according to this Embodiment. In addition, the radio communication system as shown in FIG. 8 is a system including the LTE system or SUPER 3G, for example. In the radio communication system is used carrier aggregation for integrating a plurality of base frequency blocks with the system band of the LTE system as one unit. Further, the radio communication system may be called IMT-Advanced or may be called 4G.

As shown in FIG. 8, the radio communication system 1 includes the base station apparatuses 20A, 20B and 20C and a plurality of mobile terminal apparatuses 10 ($10_1$, $10_2$, $10_3$,...,$10_n$, n is an integer where n>0) that communicate with the base station apparatuses 20A, 20B and 20C and is comprised thereof. The base station apparatuses 20A, 20B and 20C are connected to an upper station apparatus 3 0 , and the upper station apparatus 30 is connected to a core network 40. The mobile terminal apparatuses 10 are capable of communicating with the base station apparatuses 20A, 20B and 20C in cells C1, C2 and C3, respectively. In addition, for example, the upper station apparatus 30 includes an access gateway apparatus, radio network controller (RNC), mobility management entity (MME), etc., but is not limited thereto.

Each of the mobile terminal apparatuses ($10_1$, $10_2$, $10_3$,...,$10_n$) includes an LTE terminal and LTE-A terminal, and is described as a mobile terminal apparatus 10 unless otherwise specified in the following description. Further, for convenience in description, the description is given while assuming that equipment that performs radio communications with the base station apparatuses 20A, 20B and 20C is the mobile terminal apparatus 10, and more generally, the equipment may be user equipment (UE) including mobile terminal apparatuses and fixed terminal apparatuses.

In the radio communication system 1, as a radio access scheme, OFDMA (Orthogonal Frequency Division Multiple Access) is applied in downlink, while SC-FDMA (Single-Carrier Frequency Division Multiple Access) is applied in uplink, but the uplink radio access scheme is not limited thereto. OFDMA is a multicarrier transmission scheme for dividing a frequency band into a plurality of narrow frequency bands (subcarriers), and mapping data to each subcarrier to perform communications. SC-FDMA is a single-carrier transmission scheme for dividing the system band into bands comprised of a single or consecutive resource blocks for each terminal so that a plurality of terminals uses mutually different bands, and thereby reducing interference among the terminals.

Described herein are communication channels in the LTE system. The downlink communication channels have the PDSCH (Physical Downlink Shared CHannel) as a downlink data channel shared among the mobile terminal apparatuses 10, and downlink L1/L2 control channels (PDCCH, PCFICH, PHICH). Transmission data and higher layer information is transmitted on the PDSCH. Scheduling information of the PDSCH and PUSCH and the like is transmitted on the PDCCH. The number of OFDM symbols used in the PDCCH is transmitted on the PCFICH (Physical Control Format Indicator CHannel). ACK/NACK of HARQ for the PUSCH is transmitted on the PHICH.

The uplink control channels have the PUSCH as an uplink data channel shared among the mobile terminal apparatuses, and the PUCCH (Physical Uplink Control CHannel) that is a control channel in uplink. Transmission data and higher control information is transmitted on the PUSCH. Further, on the PUCCH is transmitted downlink radio quality information (CQI: Channel Quality Indicator), ACK/NACK and the like.

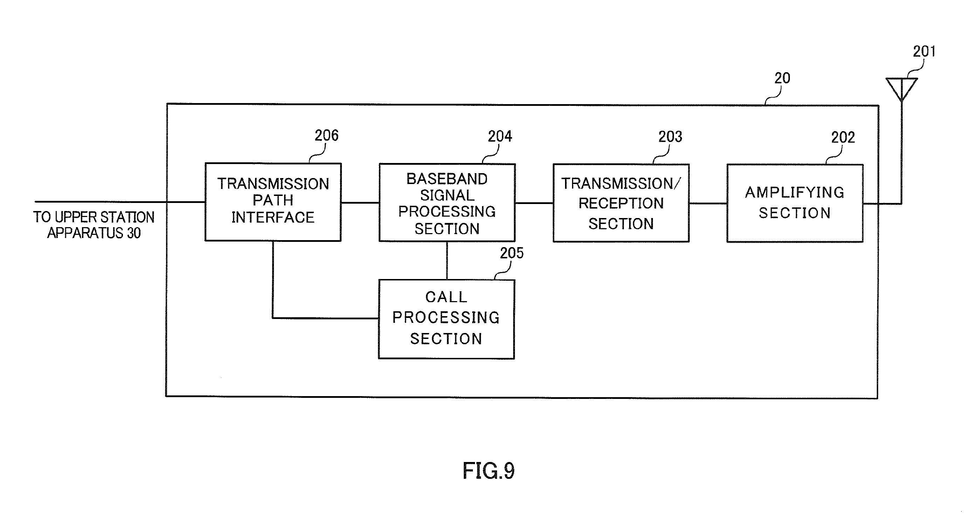

Referring to FIG. 9, described is the entire configuration of the base station apparatus according to this Embodiment. In addition, the base station apparatuses 20A, 20B and 20C have the same configuration, and therefore, are described as the base station apparatus 20. The base station apparatus 20 is provided with a transmission/reception antenna 201, amplifying section 202, transmission/reception section (transmission section) 203, baseband signal processing section 204, call processing section 205 and transmission path interface 206. The transmission data to transmit from the base station apparatus 20 to the mobile terminal apparatus 10 in downlink is input to the baseband signal processing section 204 via the transmission path interface 206 from the upper station apparatus 30.

The baseband signal processing section 204 performs, on the downlink data channel signal, PDCP layer processing, segmentation and concatenation of the transmission data, RLC (Radio Link Control) layer transmission processing such as transmission processing of RLC retransmission control, MAC (Medium Access Control) retransmission control e.g. HARQ transmission processing, scheduling, transmission format selection, channel coding, Inverse Fast Fourier Transform (IFFT) processing and precoding processing. Further, on a signal of the Physical Downlink Control Channel that is a downlink control channel, the section 204 also performs transmission processing of channel coding, IFFT and the like.

Further, the baseband signal processing section 204 notifies mobile terminal apparatuses 10 connected to the same cell of control information for each mobile terminal apparatus 10 to perform radio communications with the base station apparatus 20 on the broadcast channel. For example, the broadcast information for communications in the cell includes the system bandwidth in uplink or downlink, identification information (Root Sequence Index) of a root sequence to generate a signal of a random access preamble on the PRACH (Physical Random Access CHannel), etc.

The transmission/reception section 203 converts the frequency of the baseband signal output from the baseband signal processing section 204 into a radio frequency band. The amplifying section 202 amplifies a transmission signal subjected to frequency conversion to output to the transmission/reception antenna 201.

Meanwhile, with respect to signals transmitted from the mobile terminal apparatus 10 to the base station apparatus 20 in uplink, a radio frequency signal received in the transmission/reception antenna 201 is amplified in the amplifying section 202, subjected to frequency conversion in the transmission/reception section 203, thereby converted into a baseband signal, and is input to the baseband signal processing section 204.

The baseband signal processing section 204 performs FFT processing, IDFT processing, error correcting decoding, reception processing of MAC retransmission control, and reception processing of RLC layer and PDCP layer on the transmission data included in the baseband signal received in uplink. The decoded signal is transferred to the upper station apparatus 30 via the transmission path interface 206.

The call processing section 205 performs call processing such as setting and release of the communication channel, status management of the base station apparatus 20, and management of radio resources.

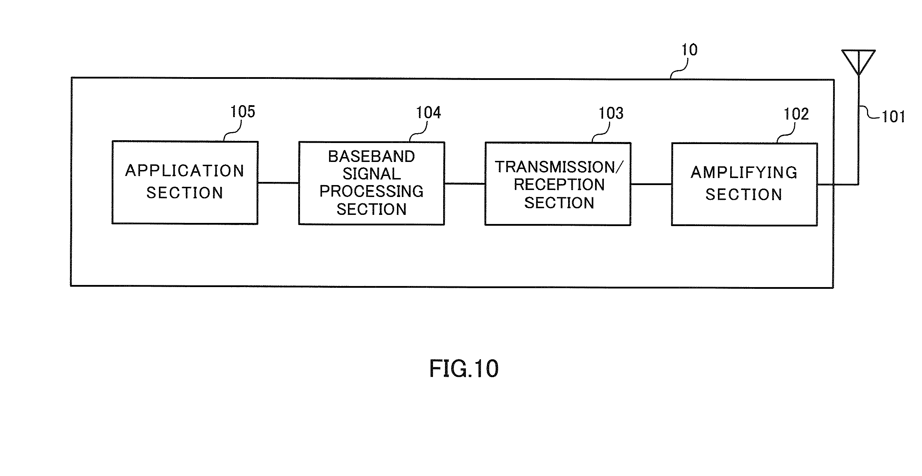

Referring to FIG. 10, described is the entire configuration of the mobile terminal apparatus 10 according to this Embodiment. The LTE terminal and the LTE-A terminal have the same configuration of principal part of hardware, and are not distinguished to describe. The mobile terminal apparatus 10 is provided with a transmission/reception antenna 101, amplifying section 102, transmission/reception section (reception section) 103, baseband signal processing section 104 and application section 105.

With respect to data in downlink, a radio frequency signal received in the transmission/reception antenna 101 is amplified in the amplifying section 102, subjected to frequency conversion in the transmission/reception section 103, and is converted into a baseband signal. The baseband signal is subjected to FFT processing, error correcting decoding, reception processing of retransmission control, etc. in the baseband signal processing section 104. Among the data in downlink, the transmission data in downlink is transferred to the application section 105. The application section 105 performs processing concerning layers higher than the physical layer and MAC layer and the like. Further, among the data in downlink, the broadcast information is also transferred to the application section 105.

Meanwhile, the application section 105 inputs transmission data in uplink to the baseband signal processing section 104. The baseband signal processing section 104 performs mapping processing, transmission processing of retransmission control (HARQ), channel coding, DFT processing and IFFT processing. The transmission/reception section 103 converts the frequency of the baseband signal output from the baseband signal processing section 104 into a radio frequency band. Then, the signal is amplified in the amplifying section 102, and is transmitted from the transmission/reception antenna 101.

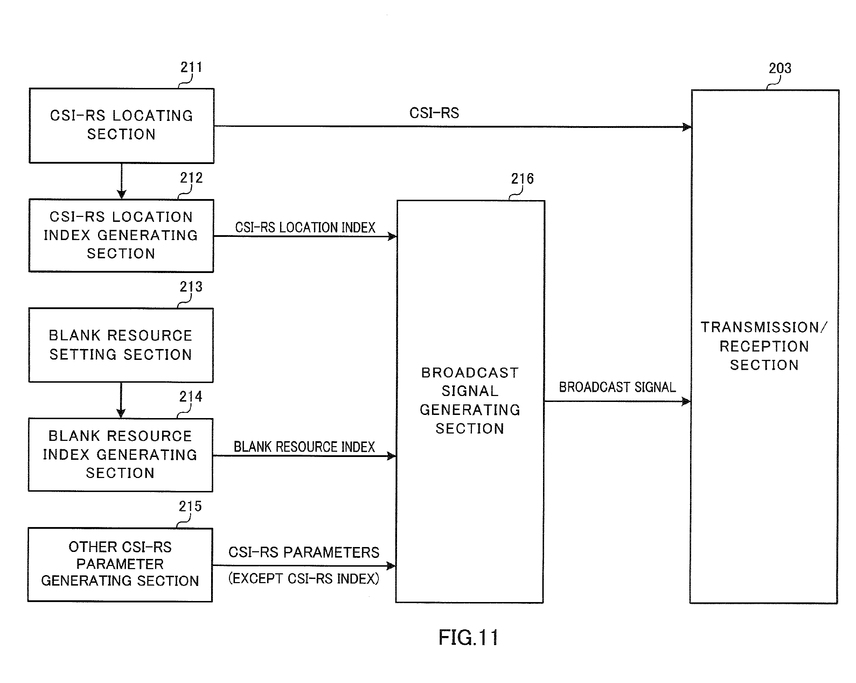

Referring to FIG. 11, described are functional blocks for the base station apparatus to cause the mobile terminal apparatus to measure the CQI. FIG. 11 is an explanatory view of functional blocks for the base station apparatus to cause the mobile terminal apparatus to measure the CQI. In addition, each functional block in FIG. 11 is mainly of processing content of the baseband processing section. Further, the functional blocks shown in FIG. 11 are simplified to describe the invention, and are assumed to have the configuration that the baseband processing section normally has. Furthermore, in the following description, the description is given while regarding a CSI-RS allocation index for identifying blank resources as a blank resource index.

As shown in FIG. 11, the base station apparatus 20 has a CSI-RS locating section (locating section) 211, a CSI-RS location index generating section 212 that generates CSI-RS location indexes, a blank resource setting section 213 that sets blank resources, a blank resource index generating section 214 that notifies blank resource indexes by the signaling method as shown in FIGs. 5A, 5B and 5C, a CSI-RS parameter generating section 215 that generates CSI-RS parameters (subframe offset, transmission power, etc.) except CSI-RS location indexes, a broadcast signal generating section 216 and the transmission/reception section 203.

The CSI-RS locating section 211 locates CSI-RSs in broadcast resources in a resource block corresponding to the number of CSI-RS ports. The CSI-RS location index generating section 212 generates indexes associated with the resources in which the CSI-RS locating section 211 locates the CSI-RSs. The CSI-RS location indexes generated in the CSI-RS location index generating section 212 are input to the broadcast signal generating section 216 as one of CSI-RS parameters.

In muting, the blank resource setting section 213 sets blank resources on resources corresponding to CSI-RS resources in which CSI-RSs are located in an adjacent cell. In addition, in this Embodiment, the blank resources may be resources to which any resources are not allocated at all, or may be defined as resources to which data is allocated to the extent of not interfering with the CSI-RS in the adjacent cell. Further, the blank resources may be defined as resources that are transmitted with transmission power of the degree of not interfering with the CSI-RS in the adjacent cell.

The blank resource index generating section 214 generates blank resource indexes for enabling the blank resource indexes to be identified by any one of the methods in FIGs. 5A, 5B and 5C. When the mobile terminal apparatus 10 is notified of the blank resource indexes, resources except location resources of CSI-RSs are recognized as blank resources on the mobile terminal apparatus 10.

The blank resource indexes generated in the blank resource index generating section 214 are input to the broadcast signal generating section 216.

The CSI-RS parameter generating section 215 generates parameters of sequence, transmission power and the like of the CSI-RS except the position of the CSI-RS.

The broadcast signal generating section 216 includes the CSI-RS location indexes, blank resource index information, and the other CSI-RS parameters to generate a broadcast signal. In this case, the broadcast signal generating section 216 includes not only the CSI-RS parameters in the cell but also CSI-RS parameters of the adjacent cell received via the transmission/reception section 203 to generate a broadcast signal. The transmission/reception section 203 transmits the CSI-RSs and broadcast signal to the mobile terminal apparatus 10.

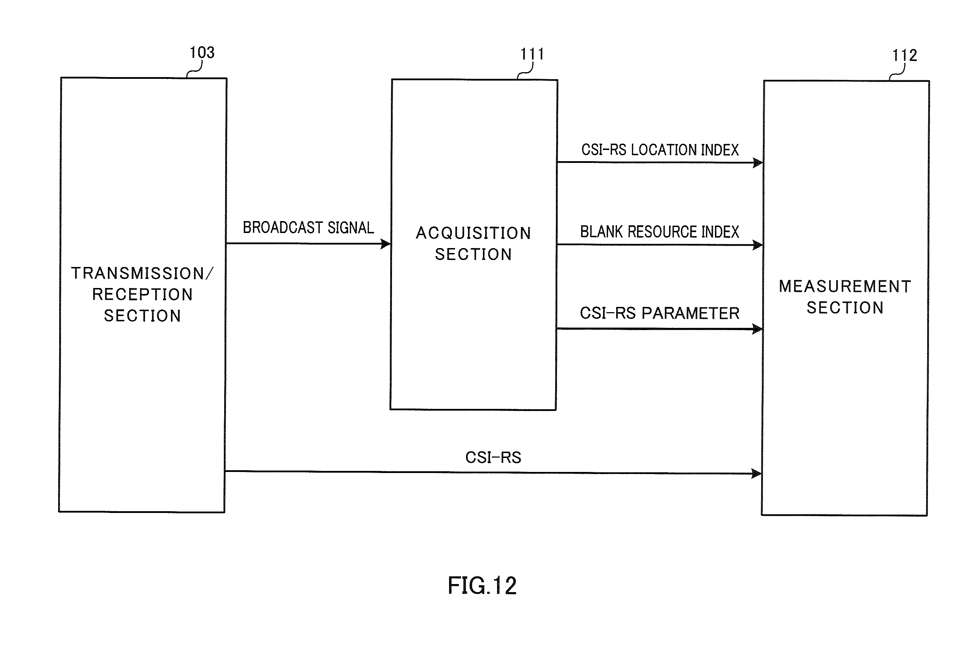

Referring to FIG. 12, described are functional blocks for the mobile terminal apparatus to measure the CQI. FIG. 12 is an explanatory view of functional blocks for the mobile terminal apparatus to measure the CQI. In addition, each functional block in FIG. 12 is mainly of processing content of the baseband processing section. Further, the functional blocks shown in FIG. 12 are simplified to describe the invention, and are assumed to have the configuration that the baseband processing section normally has.

As shown in FIG. 12, the mobile terminal apparatus 10 has the transmission/reception section 103, acquisition section 111 and measurement section 112. The transmission/reception section 103 receives CSI-RSs and broadcast signal from the base station apparatus 20. The acquisition section 111 demodulates the broadcast signal, analyzes information of the signal, and thereby acquires CSI-RS parameters such as CSI-RS location indexes, blank resource indexes, transmission power and the like.

The measurement section 112 measures CQIs based on the CSI-RS parameters of the serving cell and the adjacent cell. The measurement section 112 measures the CQIs of the serving cell and the adjacent cell from the parameters of position information, sequence, transmission power and like of CSI-RSs.

Further, the measurement section 112 measures the CQIs while considering interference components of muted resources. In this case, the measurement section 112 recognizes that resources indicated by blank resource indexes are set as blank resources except location resources of CSI-RSs in all the other cells. Therefore, the measurement section 112 measures the CQI in consideration of interference components of blank resources, while recognizing that blank resources are set on resources corresponding to location resources of CSI-RSs of the serving cell in the other cells.

As described above, according to the base station apparatus 20 according to this Embodiment, using the numbering scheme of the CSI-RS location index indicative of the location position of CSI-RS, the mobile terminal apparatus is notified of blank resource indexes. Accordingly, it is possible to notify blank resource indexes set by muting with the simplified configuration.

Further, in this Embodiment as described above, in the case where CSI-RSs are located in resources for broadcast, the invention adopts the configuration in which the base station apparatus simultaneously notifies a plurality of mobile terminal apparatuses of the position information of CSI-RSs using a broadcast signal, but the invention is not limited to the configuration. As a substitute for the configuration in which the base station apparatus simultaneously notifies mobile terminal apparatuses of the position information of CSI-RSs using a broadcast signal, another configuration for notifying mobile terminal apparatuses of CSI-RSs individually may be adopted. Accordingly, the resources for broadcast are not limited to the configuration for simultaneously notifying mobile terminal apparatuses of the position information of CSI-RSs using a broadcast signal, and are also used in notifying the mobile terminal apparatuses of the position information of CSI-RSs individually.

Furthermore, in the above-mentioned Embodiment, the mobile terminal apparatus adopts the configuration in which the acquisition section acquires the position information of blank resources from a broadcast signal, but is not limited to this configuration. The mobile terminal apparatus may adopt another configuration in which the position information of blank resources is acquired by a functional block except the acquisition section, for example, the measurement section.

Still furthermore, the above-mentioned Embodiment adopts the configuration for signaling the position information of blank resource by any one of the methods of FIGs. 5A, 5B and 5C, but is not limited to this configuration. As long as the position information of blank resources is signaled using the numbering scheme of the CSI-RS location index, the position information of blank resources is capable of being signaled by any method.

The present invention is not limited to the above-mentioned Embodiment, and is capable of being carried into practice with various modifications thereof. For example, without departing from the scope of the invention, setting positions of blank resources, the number of processing sections, processing procedures, and the number of blank resources in the above-mentioned description are capable of being carried into practice with modifications thereof as appropriate. Moreover, the invention is capable of being carried into practice with modifications thereof as appropriate without departing from the scope of the invention.

The present application is based on Japanese Patent Application No. 2010-181868 filed on August 16, 2010, entire content of which is expressly incorporated by reference herein.

**Claims**

1. A base station apparatus comprising:

   a setting section configured to set blank resources for a CSI-RS (Channel State Information-Reference Signal) that is a reference signal for downlink channel estimation; and
   a transmission section configured to transmit a bitmap indicative of a position of the blank resources to a mobile terminal apparatus.

2. A mobile terminal apparatus comprising:

   a reception section configured to receive a bitmap indicative of a position of blank resources for a CSI-RS that is a reference signal for downlink channel estimation; and
   a measurement section configured to perform downlink channel estimation based on the bitmap.

3. A signaling method comprising:

   setting blank resources for a CSI-RS (Channel State Information-Reference Signal) that is a reference signal for downlink channel estimation; and

transmitting a bitmap indicative of a position of the blank resources to a mobile terminal apparatus.

4. A radio communication system comprising:

   a base station apparatus having a setting section that sets blank resources for a CSI-RS (Channel State Information-Reference Signal) that is a reference signal for downlink channel estimation, and a transmission section that transmits a bitmap indicative of a position of the blank resources to a mobile terminal apparatus; and
   a mobile terminal apparatus having a reception section that receives the bitmap, and a measurement section that performs downlink channel estimation based on the bitmap.

FIG.1A

FIG.1B

FIG.2

CELL C1

CELL C2

CELL C3

CRS     DM-RS     USER DATA

PDCCH     CSI-RS

## FIG.3A

CELL C1

CELL C2

CELL C3

CRS     DM-RS     BLANK RESOURCES

PDCCH     CSI-RS

## FIG.3B

20A

CQI

20B

CQI

CQI

20C

10

FIG.4

CSI-RS INDEX 0 1 2 3 4
SIGNALING 0 1 0 0 1    1:MUTING

STARTING CSI-RS INDEX 1
ENDING CSI-RS INDEX 2

NUMBER OF MUTED CSI-RS : 2

FIG.5A BITMAP-BASED METHOD    FIG.5B TREE-BASED METHOD    FIG.5C NUMBER-BASED METHOD

TABLE 1-NUMBER OF SIGNALING BITS, NUMBER OF RATE MATCHING AND RE MAPPING PATTERNS

| | SIGNALING METHODS | NUMBER OF SIGNALING BITS | NUMBER OF RATE MATCHING PATTERN | NUMBER OF RE MAPPING PATTERN |
|---|---|---|---|---|
| 2CSI-RS PORT | BITMAP-BASED | 20 | 19 | 1048575 |
| | TREE-BASED | 8 | 19 | 210 |
| | NUMBER-BASED | 5 | 19 | 20 |
| 4CSI-RS PORT | BITMAP-BASED | 10 | 9 | 1023 |
| | TREE-BASED | 6 | 9 | 55 |
| | NUMBER-BASED | 4 | 9 | 10 |
| 8CSI-RS PORT | BITMAP-BASED | 5 | 4 | 31 |
| | TREE-BASED | 4 | 4 | 15 |
| | NUMBER-BASED | 3 | 4 | 5 |

FIG.6

8CSI-RS

4CSI-RS

2CSI-RS

FIG.7A

FIG.7B

FIG.7C

EP 2 608 615 A1

40

CORE NETWORK

1

UPPER
STATION
APPARATUS

30

CELL C2

$10_5$

20B

CELL C3

20C

$10_4$

$10_1$

$10_3$

20A

$10_2$

CELL C1

FIG.8

FIG.9

20

201

202 AMPLIFYING SECTION

203 TRANSMISSION/ RECEPTION SECTION

204 BASEBAND SIGNAL PROCESSING SECTION

205 CALL PROCESSING SECTION

206 TRANSMISSION PATH INTERFACE

TO UPPER STATION APPARATUS 30

EP 2 608 615 A1

| 105 | 104 | 103 | 102 |
|---|---|---|---|
| APPLICATION SECTION | BASEBAND SIGNAL PROCESSING SECTION | TRANSMISSION/ RECEPTION SECTION | AMPLIFYING SECTION |

10

101

FIG.10

```
        211                                                          203
   ┌──────────────┐                                          ┌──────────────┐
   │  CSI-RS LOCATING │         CSI-RS                        │              │
   │     SECTION      │─────────────────────────────────────▶│              │
   └──────────────┘                                          │              │
          │                                                  │              │
          ▼   212                          216               │              │
   ┌──────────────┐                 ┌──────────────┐         │              │
   │  CSI-RS LOCATION │  CSI-RS LOCATION INDEX      │         │              │
   │ INDEX GENERATING │────────────▶│              │         │ TRANSMISSION/│
   │     SECTION      │             │              │         │  RECEPTION   │
   └──────────────┘                 │              │         │   SECTION    │
                                    │              │         │              │
          213                       │  BROADCAST   │         │              │
   ┌──────────────┐                 │    SIGNAL    │ BROADCAST SIGNAL        │
   │ BLANK RESOURCE  │              │  GENERATING  │────────▶│              │
   │ SETTING SECTION │              │   SECTION    │         │              │
   └──────────────┘                 │              │         │              │
          │                         │              │         │              │
          ▼   214                    │              │         │              │
   ┌──────────────┐   BLANK RESOURCE INDEX          │         │              │
   │ BLANK RESOURCE  │─────────────▶│              │         │              │
   │ INDEX GENERATING │             │              │         │              │
   │     SECTION      │             │              │         │              │
   └──────────────┘                 │              │         │              │
          215                        │              │         │              │
   ┌──────────────┐   CSI-RS PARAMETERS             │         │              │
   │   OTHER CSI-RS  │─────────────▶│              │         │              │
   │   PARAMETER     │ (EXCEPT CSI-RS INDEX)        │         │              │
   │GENERATING SECTION│             └──────────────┘         └──────────────┘
   └──────────────┘
```

FIG.11

FIG.12

<div align="center">

**INTERNATIONAL SEARCH REPORT**

</div>

| | International application No. |
|---|---|
| | PCT/JP2011/068547 |

**A.   CLASSIFICATION OF SUBJECT MATTER**
*H04W72/04*(2009.01)i, *H04W28/06*(2009.01)i

According to International Patent Classification (IPC) or to both national classification and IPC

**B.   FIELDS SEARCHED**

Minimum documentation searched (classification system followed by classification symbols)
H04B7/24-7/26; H04W4/00-99/00;

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| Y | NTT DOCOMO, Throughput Performance Evaluation of RE Muting for Inter-cell CSI-RS, 3GPP TSG RAN WG1 Meeting #61bis, R1-104026, 2010.06.28, entire text, all drawings | 1-4 |
| Y | WO 2009/154530 A1  (TELEFONAKTIEBOLAGET L M ERICSSON (PUBL)), 23 December 2009 (23.12.2009), entire text; all drawings & US 2011/0092242 A      & EP 2291969 A & AR 72187 A            & MX 2010012317 A & KR 10-2011-0030442 A  & JP 2011-525748 A | 1-4 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 October, 2011 (27.10.11) | 08 November, 2011 (08.11.11) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2011/068547

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-89388 A (Fujitsu Ltd.),<br>23 April 2009 (23.04.2009),<br>paragraphs [0043] to [0047]; fig. 5<br>& US 2009/0086670 A1 & GB 2453527 A<br>& GB 719029 D0 & EP 2043403 A2<br>& CN 101399733 A & KR 10-2009-0032930 A | 1-4 |
| Y | WO 2009/013260 A1 (ALCATEL LUCENT),<br>29 January 2009 (29.01.2009),<br>page 11, lines 6 to 12<br>& JP 2010-534437 A & US 2009/0029711 A1<br>& EP 2031907 A1 & DE 602007001535 D<br>& CN 101355803 A & AT 436158 T<br>& ES 2329630 T | 1-4 |
| P,X | NTT DOCOMO, Views on PDSCH Muting, 3GPP TSG RAN<br>WG1 Meeting #62, R1-104932, 2010.08.23, entire<br>text, all drawings | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010181868 A

**Non-patent literature cited in the description**

- Feasibility study for Evolved UTRA and UTRAN. *3GPP,* September 2006